# EUROPEAN PATENT SPECIFICATION

(11) **EP 2 173 838 B1**
(45) Date of publication and mention of the grant of the patent: **24.10.2012**
(21) Application number: 08788601.6
(22) Date of filing: 25.07.2008
(51) Int. Cl.: C10L 1/14, C10L 1/224, C10L 1/22, C10L 10/18

(54) **USE OF A DISPERSANT TO IMPROVE OXIDATION STABILITY OF A FUEL COMPOSITION**
VERWENDUNG EINES DISPERGIERMITTELS ZUR VERBESSERUNG DER OXIDATIONSSTABILITÄT EINER TREIBSTOFFZUSAMMENSETZUNG
UTILISATION D' UN DISPERSANT POUR AMÉLIORER LA STABILITÉ OXYDANTE D'UN CARBURANT

(30) Priority: 28.07.2007 GB 0714725
(43) Date of publication of application: 14.04.2010
(60) Divisional application: 10196654.7
(73) Proprietor: Innospec Limited, Ellesmere Port Cheshire CH65 4EY (GB)
(72) Inventor: REID, Jacqueline, Cyhmau Flintshire LL12 9TQ (GB)
(74) Representative: Delaney, Jennifer
(86) International application number: PCT/GB2008/050626
(87) International publication number: WO 2009/016400

(56) References cited:
- EP-A- 0 203 692
- EP-A- 1 847 583
- WO-A-2008/049822
- WO-A2-2008/124390
- US-A- 5 049 293
- US-A- 5 468 262
- US-A1- 2005 223 627

## Description

The present invention relates to fuel 1 additives. In particular the invention relates to additives for biofuels or fuels containing biofuels, especially biodiesel or fuels containing biodiesel; and biofuels suitable for use in fuel oil compositions, for example heating oil or heavy fuel oil.

The biofuel compositions of the present invention are suitable for use in diesel engines, for automotive or non-automotive use, or as fuel oils for example heating oils or heavy fuel oils. Often middle distillate fuel oils having the same composition can be used in diesel engines or as heating oils and thus the fuel compositions described herein as biofuel or biodiesel compositions may also be suitable for use as fuel oils, for example heating oils or heavy fuel oils.

Biodiesel is an alternative to mineral diesel fuel (or petrodiesel) and contains esters of, for example, vegetable oils, animal fats and used cooking fats. Biodiesel is obtained by transesterification of oils, for example rapeseed oil, soybean oil, safflower oil, palm oil, corn oil, peanut oil, cotton seed oil, tallow, coconut oil, physic nut oil (Jatropha), sunflower seed oil, used cooking oils or any mixture thereof , with an alcohol, usually a monoalcohol, in the presence of a catalyst. For environmental reasons the importance of biodiesel as an alternative for diesel fuel increases each year. The present invention relates to fuels consisting essentially of biodiesel and also to blended fuel compositions comprising, for example, mineral diesel fuel from crude oil and biodiesel.

The present invention also relates to fuel compositions comprising biodiesel and a fuel selected from heavy fuel oil, gasoline, aviation fuel, marine fuel, bunker fuel and heating oil; middle distillate oil and heavy fuel oil; and GTL (gas-to-liquid), CTL (coal-to-liquid), BTL (biomass-to-liquid) and OTL (oil sands-to-liquid).

US2005/0223627 describes additives for increasing the thermal stability of a hydrocarbon composition, in particular fuels intended to function in an aeroplane engine.

US5049293 describes an additive for lubricant or fuel compositions comprising the boronated reaction product of polyalkenyl-substituted succinimides, aldehydes and triazoles.

The chemistry of middle distillate fuel stability and instability is complex. Naphthenic acids, heterocyclic compounds containing sulphur and nitrogen and naphthenoaromatic compounds can be found in distillate fuel components. Degradation through condensation type reactions can be common. Middle distillate fuel may also contain olefinic species which may react with atmospheric oxygen to produce hydroperoxides. These can react further and take part in the condensation reactions to produce high molecular weight deposit forming compounds. Whilst antioxidant compounds, effective at preventing free radical oxidative degradation of fuel, such as the traditional hindered phenol an d phenylenediamine antioxidants are well known, these additives are often insufficient to provide the desired stability performance of middle distillate fuel.

Middle distillate fuel stabilisers are often mixtures of various additives having different functions. These stabilisers may or may not contain an antioxidant and may often include a dispersant. The purpose of the dispersant is to prevent the formation of insoluble gums and sediments, to prevent their deposition on metal surfaces and in some cases to solubilise or disperse any existing deposits.

The terms dispersant and detergent are sometimes used to refer to different characteristics or chemistries of an additive but throughout this specification the terms are used interchangeably.

The stability of diesel fuel is typically measured by looking at the gum forming tendency, the sediment forming tendency and the colour of a fuel. The addition of a dispersant reduces the gum and sediment forming tendency. Typical additive packages for mineral diesel fuels are described in GB2156848.

There are a number of standard tests available for assessing the stability of diesel fuel, including the following ASTM methods.

In the method of ASTM D4625, four 100ml samples of filtered fuel are aged for 0, 4, 8, 12, 18 and 24 weeks at 43°C. After aging for a selected time, the sample is cooled to room temperature and then analysed for filterable and adherent insoluble materials.

In the method of ASTM D6488, two 50ml samples of filtered fuel are aged for 90 or 180 mins at 150°C in open tubes with exposure to air. After aging and cooling the samples are filtered and an estimate of the sediment is made by measuring the reflectance of the filter pad.

In the method of ASTM D2274, a 350ml sample of filtered fuel is aged at 95°C for 16h while oxygen is bubbled through the sample at a rate of 3L/h. After aging, the sample is cooled to room temperature and filtered to give filterable insolubles. Adherent insolubles are removed by rinsing the glassware with solvent, evaporating the solvent and weighing the residue. The sum of filterable and adherent insolubles is the total insolubles, expressed in mg/100ml.

In each of these three ASTM tests, the addition of a dispersant can have a positive effect due to its ability to prevent the formation of insoluble gums and sediments.

Oxidation stability can be measured by a number of different methods. For biofuels a frequently used method is the Rancimat test. The Rancimat test is an accelerated oxidation test in which a sample is heated with air bubbling through. Volatile breakdown products pass over into deionised water and the conductivity of the water is measured. The time taken for fuel to breakdown is measured by recording the time at which an increase in conductivity is observed. As the Rancimat measures conductivity of acids produced during decomposition typical dispersants would not be expected to produce a positive result in the Rancimat test.

In recent years, diesel fuels have been hydrotreated to remove sulphur compounds. This has led to a decrease in the lubricity of diesel fuels and thus lubricity additives are now added. It is also thought that the sulphur containing compounds and/or other materials removed by hydrotreatment may have antioxidant properties. Peroxide formation is sometimes observed in hydrotreated fuels. If necessary antioxidant compounds may be added. These compounds are typically hindered phenol compounds or phenylenediamine compounds as are described in "Ondeo/Nalco Fuel Field Manual" by Kim B Peyton, McGraw-Hill Publishing Co., 2 Rev Ed (1 Dec 2001).

More recently for environmental reasons fuels comprising biodiesel have become increasingly used.

Biodiesel has a high content of unsaturated fatty acid esters which can be easily oxidized by atmospheric oxygen. Products formed by oxidation can lead to corrosion and blockages in injection pumps and/or fuel lines. As a result, antioxidant compounds are added to biodiesel and fuels containing biodiesel. These compounds are typically phenylenediamines or especially hindered phenol compounds such as those described in US2006/0218855.

The addition of fuel additives increases the cost of a fuel and in a competitive marketplace it is desirable to minimise concentrations of additives, and to limit the number and type of additives which are added to a fuel.

It is an object of the present invention to provide additised fuel compositions comprising biodiesel which have improved properties.

According to a first aspect of the present invention there is provided the use of a nitrogen-containing dispersant additive to improve the oxidation stability of a fuel composition containing biodiesel and an antioxidant additive selected from phenolic antioxidants and phenylenediamine antioxidants; wherein the nitrogen-containing dispersant is an acylated nitrogen-containing compound that is made by reacting a poly(isobutene)-substituted succinic acid-derived acylating agent wherein the poly(isobutene) substituent has 12 to 200 carbon atoms with a mixture of ethylene polyamines having 3 to 9 amino nitrogen atoms per ethylene polyamine and 1 to 8 ethylene groups wherein the acylated nitrogen compounds are formed by the reaction of a molar ratio of acylating agent : amino compound of from 2:1 to 1:2; wherein the phenolic antioxidant is selected from tertiarybutylhydroquinone, pyrogallol, propylgallate, BH T pyrocatechol and tertiarybutylcatechol; and wherein the poly(isobutene)-substituted succinic acid-derived acylating agent has a PIB molecular weight of from 500 to 2800.

The fuel composition may be based on heavy fuel oil, diesel, gasoline, aviation fuel, bio fuel, marine fuel, bunker fuel and heating oil; middle distillate oil and heavy fuel oil; and GTL (gas-to-liquid), CTL (coal-to-liquid), BTL (biomass-to-liquid, OTL (oil sands-to-liquid) or any mixture thereof. Preferably it is a diesel fuel composition.

A number of acylated, nitrogen-containing compounds having a hydrocarbyl substituent of a least 8 carbon atoms and made by reacting a carboxylic acid acylating agent with an amino compound are known to those skilled in the art. In such compositions the acylating agent is linked to the amino compound through an imido, amido, amidine or acyloxy ammonium linkage. The hydrocarbyl substituent of at least 8 carbon atoms may be in either the carboxylic acid acylating agent derived portion of the molecule or in the amino compound derived portion of the molecule, or both. Preferably, however, it is in the acylating agent portion. The acylating agent can vary from formic acid and its acylating derivatives to acylating agents having high molecular weight aliphatic substituents of up to 5,000, 10,000 or 20,000 carbon atoms. The amino compounds can vary from ammonia itself to amines having aliphatic substituents of up to about 30 carbon atoms.

Acylated amino compounds suitable for use in the present invention are those formed by the reaction of an acylating agent having a hydrocarbyl substituent of at least 8 carbon atoms and a compound comprising at least one primary or secondary amine group. The acylating agent is a substituted succinic acid and the amino compound is a mixture of ethylene polyamines. Th e hydrocarbyl substituent in such acylating agents preferably comprises at least 12, for example 30 or 50 carbon atoms. It may comprise up to about 200 carbon atoms. The hydrocarbyl substituent of the acylating agent has a number average molecular weight (Mn) of between 500 to 2800, preferably from 500 to 1500 and more preferably 500 to 1100. An Mn of 700 to 1300 is especially preferred.

The hydrocarbyl based substituents may be made from homopolymers of isobutene.

The term "hydrocarbyl" as used herein denotes a group having a carbon atom directly attached to the remainder of the molecule and having a predominantly aliphatic hydrocarbon character. Suitable hydrocarbyl based groups may contain non-hydrocarbon moieties. For example they may contain up to one non-hydrocarbyl group for every ten carbon atoms provided this non-hydrocarbyl group does not significantly al t e r th e predominantly hydrocarbon character of the group. Those skilled in the art will be aware of such groups, which include for example hydroxyl, halo (especially chloro and fluoro), alkoxyl, alkyl mercapto, alkyl sulfoxy, etc. Preferred hydrocarbyl based substituents are purely aliphatic hydrocarbon in character and do not contain such groups.

Th e hydrocarbyl-based substituents a r e preferably predominantly saturated, that is, they contain no more than one carbon-to-carbon unsaturated bond for every ten carbon-to-carbon single bonds present. Most preferably they contain no more than one carbon-to-carbon nonaromatic unsaturated bond for every 50 carbon-to-carbon bonds present.

Preferred hydrocarbyl-based substituents ar e poly-(isobutene)s known in the art.

Particularly preferred hydrocarbyl-substituted succinic acid derivatives include polyisobutene succinic acid derivatives having a PIB molecular weight of from 500 to 1500, preferably from 500 to 1100 or 700 to 1300 and most preferably from 700 to 1100.

Amino compounds useful for reaction with these acylating agents include the following:
polyalkylene polyamines of the general formula:

   (R³)₂N[U-N(R³)]ₙR³

   wherein each R³ is independently selected from a hydrogen atom, a hydrocarbyl group or a hydroxy-substituted hydrocarbyl group containing up to about 30 carbon atoms, with proviso that at least one R³ is a hydrogen atom, n is a whole number from 1 to 10 and U is an ethylene group. Preferably each R³ is independently selected from hydrogen, methyl, ethyl, propyl, isopropyl, butyl and isomers thereof. Most preferably each R³ is ethyl or hydrogen.

Specific examples of polyalkylene polyamines (1) include ethylene diamine, tetra(ethylene)pentamine, tri-(trimethylene) tetramine, pentaethylenehexamine, hexaethyleneheptamine, and other commercially available materials which comprise complex mixtures of polyamines. Fo r example, higher ethylene polyamines optionally containing all or some of the above in addition to higher boiling fractions containing 8 or more nitrogen atoms etc.

Preferably the polyamine is selected from ethylenediamine, diethylenetriamine, triethylenetetramine, tetraethylenepentamine, pentaethylenehexamine, hexaethyleneheptamine, and mixtures thereof.

Many patents have described useful acylated nitrogen compounds including U.S. Pat. Nos. 3,172,892; 3,219,666; 3,272,746; 3,310,492; 3,341,542; 3,444,170; 3,455,831; 3,455,832; 3,576,743; 3,630,904; 3,632,511; 3,804,763, 4,234,435 and US6821307.

The acylated nitrogen-containing compound of the invention is that made by reacting a poly(isobutene)-substituted succinic acid-derived acylating agent (e.g., anhydride, acid, ester, etc.) wherein the poly(isobutene) substituent has between about 12 to about 200 carbon atoms with a mixture of ethylene polyamines having 3 to about 9 amino nitrogen atoms per ethylene polyamine and about 1 to about 8 ethylene groups. These acylated nitrogen compounds are formed by the reaction of a molar ratio of acylating agent : amino compound of from 2:1 to 1:2 and most preferably from 2:1 to 1:1. This type of acylated amino compound and the preparation thereof is well known to those skilled in the art and are described in the above-referenced US patents.

The present invention covers the use of a nitrogen-containing dispersant as an antioxidant additive in any fuel containing biodiesel. This may be a fuel which consists essentially of biodiesel. Alternatively it may be a fuel which comprises mineral diesel fuel (extracted from crude oil) blended with an amount of biodiesel. For example the fuel composition of the present invention may contain up to 1 wt% of biodiesel, for example up to 2 wt%, up to 3 wt%, up to 4 wt%, up to 5 wt%, up to 10 wt%, up to 15 wt%, up to 20 wt%. The fuel composition may contain up to 25 wt%, up to 30 wt%, up to 40 wt%, up to 50 wt%, up to 60 wt%, up to 70 wt%, up to 75 wt%, up to 80 wt%, up to 85 wt%, up to 90 wt%, up to 95 wt%, or up to 99 wt% biodiesel.

In one preferred embodiment the fuel composition comprises from 1 to 30 wt% biodiesel.

A fuel which comprises 100% biodiesel is denoted as B100, a fuel which comprises 90 % mineral diesel and 10% biodiesel is known as B10; fuel comprising 50% mineral diesel and 50% biodiesel is know as B50; and so on.

In some embodiments fuel compositions of the present invention are prepared by adding the nitrogen-containing dispersant to pure B100 biodiesel and then blending the mixture with mineral diesel in the appropriate ratio.

Suitably the nitrogen-containing dispersant additive is added to the fuel in an amount of at least 5 ppm, preferably at least 10 ppm, more preferably at least 15 ppm and most preferably at least 20 ppm. Suitably the nitrogen-containing dispersant / antioxidant additive is added to the fuel composition in an amount of up to 20,000 ppm, preferably up to 10,000 ppm, more preferably up to 5,000 ppm, preferably up to 1,000 ppm and most preferably up to 500 ppm.

Preferably the nitrogen-containing dispersant is present in the fuel composition in an amount of from 10 ppm to 5000 ppm (by weight) of the amount of biodiesel present in the composition, preferably from 50 ppm to 3000 ppm, more preferably from 100 ppm to 2000 ppm and most preferably from 200 ppm to 1000 ppm.

The oxidation stability of a biofuel may be measured by the Rancimat method. The Rancimat test is an accelerated oxidation test carried out at elevated temperatures in which a fuel sample is exposed to air.

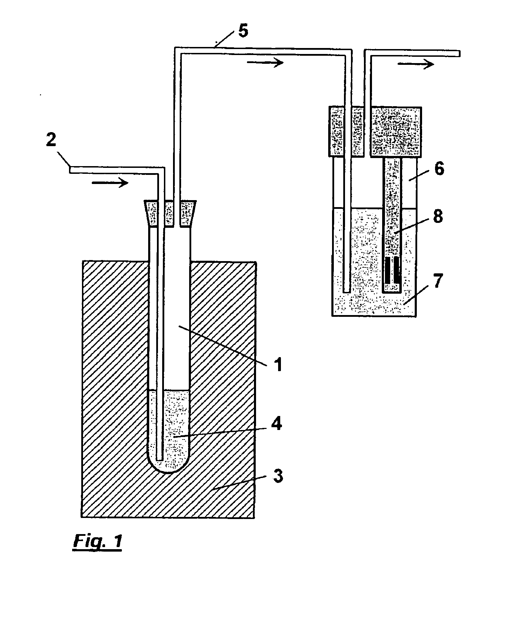

Figure 1 shows a schematic measuring arrangement used in a typical Rancimat test method. In the Rancimat method, a sample of biofuel 4 is held in a sealed reaction tube 1 at a constant temperature selected from a range of between 50 and 220°C controlled by heating block 3 while a continuous flow of air is passed through the sample via inlet tube 2. Fatty acid methyl esters in the sample are oxidized to peroxides as primary oxidation products. After some time, the fatty acids completely decompose into secondary oxidation products. In addition to volatile organic compounds, these include low-molecular weight organic acids, mainly formic and acetic acids. An air flow transports them via outlet tube 5 to a measuring vessel 6 containing distilled water as an absorption solution 7. The conductivity of this water is recorded continuously using conductivity measuring cell 8. As soon as volatile carboxylic acids are formed in the sample an increase in conductivity in the measuring vessel is observed. The time that elapses until the secondary oxidation products are detected is known as the induction time and the time taken until a predetermined increase in conductivity is observed is known as the stability time. These measures provide a good characteristic value for the oxidation stability.

In the European standard test method EN 14112 of the Rancimat test, the test sample is a fatty acid methyl ester, the test temperature is 110°C and the measure of oxidation stability is the induction period.

In the European standard for Biodiesel quality EN 14214, the specified minimum induction period is 6 hours.

In tests carried out by the inventors of the present invention the stability time was measured. In this case the time taken to achieve an increase in conductivity of 200 µS/cm was recorded.

Preferably the use of a nitrogen-containing dispersant increases the oxidation stability as measured by the Rancimat test of a fuel composition containing biodiesel by at least 5%, preferably at least 10%, more preferably at least 15%.

Surprisingly it has been found that when a nitrogen-containing dispersant is used in conjunction with a known antioxidant additive in a fuel composition containing biodiesel, a large increase in the oxidation stability of the fuel is observed. It was found that the effect of the two additives shows an unexpected improvement which may be synergistic. Oxidation stability of a fuel may, for example, be measured by the Rancimat test procedure.

The present invention provides the use of a nitrogen-containing dispersant additive to improve the oxidation stability of a fuel composition containing biodiesel and an antioxidant additive.

The antioxidant additive may be selected from phenolic antioxidants and phenylenediamine antioxidants.

The phenolic antioxidant compound is selected from tertiarybutylhydroquinone (TBHQ) or MTBHQ), pyrogallol, pyrocatechol, 2,6-di-tert-butyl-4-methylphenol (BHT), propylgallate and tertiarybutylcatechol.

Preferred phenylenediamine antioxidants suitable for use in the present invention include those of formula III: 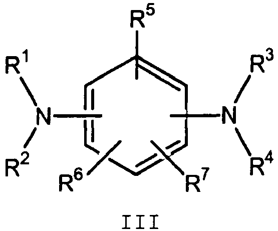 wherein R¹, R², R³, R⁴, R⁵, R⁶ and R⁷ are independently selected from an optionally substituted alkyl or alkenyl group, an aryl group, an ester, a carboxylic acid, an aldehyde, a ketone, an ether, an alcohol, an amine or an amide. Preferably R¹ is hydrogen. Preferably R³ is hydrogen. Preferably R² is an alkyl group, preferably having 1-10 carbon atoms. More Preferably R² is an alkyl group having 1-5 carbon atoms. Preferably R² is selected from methyl, ethyl, propyl, isopropyl, butyl, isobutyl, secbutyl and tertiarybutyl. Most preferably R² is isopropyl or secbutyl. Preferably R⁴ is an alkyl group, preferably having 1-10 carbon atoms. More preferably R⁴ is an alkyl group having 1-5 carbon atoms. R⁴ is preferably selected from methyl, ethyl, propyl, isopropyl, secbutyl, butyl, tertiarybutyl and isobutyl. Most preferably R⁴ is isopropyl or sec butyl.

R⁵, R⁶ and R⁷ are preferably selected from hydrogen or alkyl groups, more preferably from hydrogen and alkyl groups having 1-10 carbon atoms, more preferably from hydrogen and alkyl groups having 1-5 carbon atoms. Preferably R⁵, R⁶ and R⁷ are independently selected from hydrogen, methyl, ethyl, propyl, isopropyl, butyl, tertiarybutyl and isobutyl. Most preferably R⁵ is hydrogen. Most preferably R⁶ is hydrogen. Most preferably R⁷ is hydrogen.

I n a preferred embodiment however the antioxidant component of the present invention is a phenolic antioxidant compound especially a hindered phenolic antioxidant compound. By hindered phenolic antioxiodant, we refer to a phenol compound which is preferably ortho-substituted. It may also be para substituted.

In some embodiments in which the nitrogen containing dispersant is the reaction product of a carboxylic acid-derived acylating agent and an amino compound, the antioxidant additive do e s not comprise 2,4-di-tert-butylhydroxytoluene or 2,5-di-tert-butylhydroquinone.

Suitably the antioxidant additive is present in an amount of at least 1 ppm, more preferably at least 5 ppm, preferably at least 10 ppm, more preferably at least 15 ppm and most preferably at least 20 ppm (by weight). The phenolic antioxidant may be present in the composition in an amount of up to 20,000 ppm, preferably up to 10,000 ppm, more preferably up to 5,000 ppm, preferably up to 1,000 ppm and most preferably up to 500 ppm.

Preferably the antioxidant additive is present in the fuel composition in an amount from 10 ppm to 5000 ppm (by weight) of the biodiesel present in the composition, preferably from 50 ppm to 1000 ppm, more preferably from 100 ppm to 500 ppm and most preferably from 150 ppm to 300 ppm.

Suitably the weight ratio of nitrogen-containing dispersant to phenolic antioxidant is from 20:1 to 1:20, suitably from 10:1 to 1:10, preferably from 5:1 to 1:5, more preferably from 3:1 to 1:3, for example from 2:1 to 1:2.

Preferably the use of a nitrogen-containing dispersant increases the oxidation stability as measured by the Rancimat test of a fuel composition containing biodiesel and an antioxidant additive by at least 5%, preferably at least 10%, more preferably at least 15%.

The present invention provides a fuel composition comprising biodiesel, optionally an antioxidant additive and an amount of a nitrogen-containing dispersant sufficient to improve the oxidation stability of the composition compared to a composition which does not contain said nitrogen-containing dispersant. Suitably the oxidation stability is improved by at least 10%, preferably by at least 20%, more preferably by at least 30%, most preferably by at least 40%.

The oxidation stability may suitably be measured by recording the stability time or the induction time as measured by a Rancimat test.

Preferred features of the composition are as defined above.

As well as improving the oxidation stability of a fuel containing biodiesel an d optionally a phenolic antioxidant, the applicant has also found that nitrogen-containing dispersants alone show excellent antioxidant properties at elevated temperatures, for example, at temperatures typically found in modern diesel engines.

Modern diesel engines include HSDI (High Speed Direct Injection) engines which provide improved performance and are more environmentally friendly.

The fuel in these engines can be re-circulated and thus may reach very high temperatures, for example temperatures of 150°C or more.

Biodiesel fuels have poorer oxidation stability than mineral diesel and this effect is particularly apparent at higher temperatures.

According to a further aspect of the present invention there is provided the use of a nitrogen-containing dispersant to improve the oxidation stability of a fuel composition containing biodiesel and an antioxidant additive at temperatures above 110°C.

The nitrogen-containing dispersant, th e antioxidant additive and fuel are preferably as previously defined herein.

Suitably the nitrogen-containing dispersant improves the oxidation stability of the fuel 1 composition at temperatures of above 120°C, preferably above 130°C, more preferably above 140°C, for example, 150°C.

Thus a nitrogen-containing dispersant may be used to improve the oxidation stability of a fuel composition containing biodiesel and an antioxidant additive as defined herein when used in an HSDI engine.

The present invention may provide a fuel composition comprising a nitrogen containing dispersant and a traditional antioxidant wherein the treat rate of traditional antioxidant is less than would be needed to achieve an equivalent oxidation stability in a composition which did not contain the nitrogen containing dispersant. The present invention may thus provide a composition comprising biodiesel, from 1 to 10000 ppm, for example 1 to 1000 ppm, nitrogen-containing dispersant and less than 100 ppm traditional antioxidant, preferably less than 50 ppm, for example, less than 30 ppm, preferably less than 20 ppm, more preferably less than 10 ppm, most preferably less than 5 ppm, for example less than 1 ppm traditional antioxidant; by weight of biodiesel.

Suitably said composition contains at least 5 ppm, preferably at least 10 ppm, more preferably at least 15 ppm and most preferably at least 20 ppm nitrogen-containing dispersant by weight of biodiesel.

Suitably said composition contains up to 500 ppm, preferably up to 400 ppm, preferably up to 300 ppm of nitrogen-containing dispersant, by weight of biodiesel.

The oxidation stability at high temperatures may suitably be measured using a Rancimat test run at a temperature of 150°C.

Suitably the present invention provides the use of a nitrogen-containing dispersant to increase the oxidation stability of a fuel composition containing biodiesel and an antioxidant additive as defined herein as measured by a Rancimat test at 150°C by at least 5%, preferably at least 10%, more preferably at least 15% and most preferably by at least 20%. This improvement should be measured with reference to the unadditised fuel.

The present invention further provides the use of a composition as hereinbefore described as heating oil, or a heavy fuel oil.

Any feature of any aspect of the invention may be combined with any other aspect, as appropriate.

The invention will now be further described by way of the following non-limiting examples.

### Example 1

A sample of biodiesel comprising rapeseed methylester base fuel sourced from Spain was subjected to a Rancimat test method. The sample was heated to 110°C with air bubbling through. Volatile breakdown products pass over into deionised water and the conductivity is measured The time taken for the stability of the fuel to breakdown was measured by recording the stability time, the time taken to increase the conductivity by 200 µS/cm. Various additives were then added to the base biodiesel fuel and the Rancimat test repeated. The results are given in table 1.

**TABLE 1**

| **Fuel** | **Additives** | **Treat rate, ppm active** | **Temp. °C** | **Stability Time (h)** | **% improvement** |
|---|---|---|---|---|---|
| B100 | - | - | 110 | 5.96 | - |
| B100 | Additive A | 250 | 110 | 6.73 | 13 |
| B100 | TBHQ | 250 | 110 | 8.13 | 36 |
| B100 | Pyrogallol | 250 | 110 | 10.09 | 69 |
| B100 | Pyrocatechol | 250 | 110 | 6.02 | 1 |
| B100 | Tert-butylcatechol | 250 | 110 | 5.18 | -13 |

Additive A is a 60% active ingredient solution (in aromatic solvent) of a polyisobutenyl succinimide obtained from the condensation reaction of a polyisobutenyl succinic anhydride derived from polyisobutene of Mn approximately 750 with a polyethylene polyamine mixture of average composition approximating to tetraethylene pentamine. Additive A1 is a 60% active ingredient solution (in aromatic solvent) of a polyisobutenyl succinimide obtained from the condensation reaction of a polyisobutenyl succinic anhydride derived from polyisobutene of Mn approximately 750 with a polyethylene polyamine mixture of average composition approximating to tetraethylene pentamine. The mole ratio of polyisobutenyl succinic anhydride : polyethylene polyamine was approximately 1:1.

B100 refers to a fuel composition which consists of entirely of biodiesel base fuel.

### Example 2

The Rancimat test of example 1 was then run on samples of biodiesel B100 at 110°C using on this occasion just a single additive, and additive combinations. Additive A is as defined in relation to Example 1. The results are shown in table 2.

**TABLE 2**

| **Fuel** | **Additives** | **Treat rate, ppm active** | **Temp. °C** | **Stability Time (h)** | **% improvement** |
|---|---|---|---|---|---|
| B100 | - | - | 110 | 5.96 | - |
| B100 | Additive A | 190 | 110 | 6.83 | 15 |
| B100 | TBHQ | 250 | 110 | 8.13 | 36 |
| B100 | TBHQ + Additive A | 250 + 190 | 110 | 11.23 | 88 |
| B100 | Pyrogallol | 250 | 110 | 10.09 | 69 |
| B100 | Pyrogallol + Additive A | 250 + 190 | 110 | 16.83 | 182 |
| B100 | Pyrocatechol | 250 | 110 | 6.02 | 1 |
| B100 | Pyrocatechol + Additive A | 250 + 190 | 110 | 10.66 | 79 |
| B100 | Tert-butylcatechol | 250 | 110 | 5.18 | -13 |
| B100 | Tert-butylcatechol + Additive A | 250 + 190 | 110 | 10.31 | 73 |

The above results clearly show that for each of the biodiesel fuels containing a phenolic antioxidant additive, a synergistic improvement in stability was found upon co-addition of the nitrogen-containing dispersant additive A.

### Example 3

The tests of Example 1 were then repeated except that the Rancimat test was carried out at 150°C, with all other variables being constant. The results are shown in table 3.

**TABLE 3**

| **Fuel** | **Additives** | **Treat rate, ppm active** | **Temp. °C** | **Stability Time** | **% Improvement** |
|---|---|---|---|---|---|
| B100 | - | - | 150 | 0.68 | - |
| B100 | Additive A | 250 | 150 | 1.84 | 171 |
| B100 | TBHQ | 250 | 150 | 1.77 | 160 |
| B100 | Pyrogallol | 250 | 150 | 1.24 | 82 |
| B100 | Pyrocatechol | 250 | 150 | 1.17 | 72 |
| B100 | Tert-butylcatechol | 250 | 150 | 1.08 | 59 |

These results clearly show that at an increased temperature of 150°C, a temperature commonly found in modern HSDI diesel engines, additive A, a nitrogen-containing dispersant, performs better than standard phenolic antioxidant additives.

### Example 4

The Rancimat tests at 150°C were then carried out on a sample B10 which contains 10% by weight base RME biodiesel from Spain, and 90% standard mineral diesel oil sourced from Haltermans and known as RF-06.

The results are shown in table 4. The specification of fuel RF-06 is shown in table 5.

**TABLE 4**

| **Fuel** | **Additives** | **Treat rate, ppm active** | **Temp. °C** | **Stability time** | **% Improvement** |
|---|---|---|---|---|---|
| B10 | - | - | 150 | 2.05 | - |
| B10 | Additive A | 25 | 150 | 2.76 | 35 |
| B10 | Additive A | 96 | 150 | 3.48 | 70 |
| B10 | TBHQ | 25 | 150 | 3.39 | 65 |
| B10 | Pyrogallol | 25 | 150 | 3.45 | 68 |
| B10 | Pyrocatechol | 25 | 150 | 2.3 | 12 |
| B10 | Tert-butylcatechol | 25 | 150 | 2.66 | 30 |

**TABLE 5**

| **Property** | **Units** | **Limits** | | **Method** |
|---|---|---|---|---|
| | | **Min** | **Max** | |
| Cetane Number | | 52 | 54 | EN ISO 5165 |
| Density at 15°C | kg/m3 | 833 | 837 | EN ISO 3675 |
| Distillation | | | | EN ISO 3405 |
| 50% v/v Point | °C | 245 | - | |
| 95% v/v Point | °C | 345 | 350 | |
| FBP | °C | - | 370 | |
| Flash Point | °C | 55 | - | EN 22719 |
| Cold Filter Plugging Point | °C | - | -5 | EN 116 |
| Viscosity at 40°C | mm2/sec | 2.3 | 3.3 | EN ISO 3104 |
| Polycyclic Aromatic Hydrocarbons | % m/m | 3.0 | 6.0 | IP 391 |
| Sulphur Content | mg/kg | - | 10 | ASTM D5453 |
| Copper Corrosion | | - | 1 | EN ISO 2160 |
| Conradson Carbon Residue on 10% Dist. Residue | % m/m | - | 0.2 | EN ISO 10370 |
| Ash Content | % m/m | - | 0.01 | EN ISO 6245 |
| Water Content | % m/m | - | 0.02 | EN ISO 12937 |
| Neutralisation (Strong Acid) Number | mg KOH/g | - | 0.02 | ASTM D 974 |
| Oxidation Stability | mg/mL | - | 0.025 | EN ISO 12205 |
| HFRR (WSD1,4) | µm | - | 400 | CEC F-06-A-96 |
| Fatty Acid Methyl Ester | | prohibited | | |

A nitrogen-containing dispersant would typically be added to a B10 fuel (to achieve dispersancy/detergency) at a treat rate of about 100 ppm. The results shown in table 4 show that this alone will improve oxidation stability at 150°C in an amount greater than the addition of a standard phenolic antioxidant additive.

### Example 6

The Rancimat test of example 1 was then run on samples of biodiesel B100 (RME biodiesel derived from canola, sourced from the USA) at 110°C, including the nitrogen dispersant additives of the present invention listed in table 6.

**TABLE 6**

| **Fuel** | **Additives** | **Treat Rate (ppm active)** | **Temp, °C** | **Induction Time, h** | **% Improvement** |
|---|---|---|---|---|---|
| B100 | - | - | 110 | 4.58 | - |
| B100 | A1 | 250 | 110 | 5.47 | 19% |
| B100 | A1 | 500 | 110 | 6.23 | 36% |
| B100 | A2 | 250 | 110 | 4.41 | -4% |
| B100 | A2 | 500 | 110 | 4.17 | -9% |
| B100 | B1 | 250 | 110 | 6.03 | 32% |
| B100 | B2 | 250 | 110 | 5.04 | 10% |
| B100 | B2 | 500 | 110 | 5.86 | 28% |
| B100 | B3 | 250 | 110 | 5.17 | 13% |
| B100 | B3 | 500 | 110 | 5.34 | 17% |
| B100 | B4 | 250 | 110 | 4.52 | -1% |
| B100 | B4 | 500 | 110 | 4.62 | 1% |
| B100 | C1 | 250 | 110 | 6.17 | 35% |
| B100 | C2 | 250 | 110 | 5.3 | 16% |
| B100 | C2 | 500 | 110 | 6.08 | 33% |
| B100 | C3 | 250 | 110 | 5.4 | 18% |

Additive A1 is a 60% active ingredient solution (in aromatic solvent) of a polyisobutenyl succinimide obtained from th e condensation reaction of a polyisobutenyl succinic anhydride derived from polyisobutene of Mn approximately 750 with a polyethylene polyamine mixture of average composition approximating to tetraethylene pentamine. The mole ratio of polyisobutenyl succinic anhydride : polyethylene polyamine was 1:1.

Additive A2 is a 60% active ingredient solution (in aromatic solvent) of a polyisobutenyl succinimide obtained from th e condensation reaction of a polyisobutenyl succinic anhydride derived from polyisobutene of Mn approximately 750 with a polyethylene polyamine mixture of average composition approximating to tetraethylene pentamine. The mole ratio of polyisobutenyl succinic anhydride : polyethylene polyamine was 4:1.

Additive B1 is a 60% active ingredient solution (in aromatic solvent) of a polyisobutenyl succinimide obtained from the condensation reaction of a polyisobutenyl succinic anhydride derived from polyisobutene of Mn approximately 750 with a polyethylene polyamine mixture of average composition approximating t o hexaethylene heptamine. The mole ratio of polyisobutenyl succinic anhydride : polyethylene polyamine was 1:1.

Additive B2 is a 60% active ingredient solution (in aromatic solvent) of a polyisobutenyl succinimide obtained from th e condensation reaction of a polyisobutenyl succinic anhydride derived from polyisobutene of Mn approximately 750 with a polyethylene polyamine mixture of average composition approximating t o hexaethylene heptamine. The mole ratio of polyisobutenyl succinic anhydride : polyethylene polyamine was 1.4:1.

Additive B3 is a 60% active ingredient solution (in aromatic solvent) of a polyisobutenyl succinimide obtained from th e condensation reaction of a polyisobutenyl succinic anhydride derived from polyisobutene of Mn approximately 750 with a polyethylene polyamine mixture of average composition approximating t o hexaethylene heptamine. The mole ratio of polyisobutenyl succinic anhydride : polyethylene polyamine was 2:1.

Additive B4 is a 60% active ingredient solution (in aromatic solvent) of a polyisobutenyl succinimide obtained from th e condensation reaction of a polyisobutenyl succinic anhydride derived from polyisobutene of Mn approximately 750 with a polyethylene polyamine mixture of average composition approximating t o hexaethylene heptamine. The mole ratio of polyisobutenyl succinic anhydride : polyethylene polyamine was 4:1.

Additive C1 is a 75 % active ingredient solution (in aromatic solvent) of a mannich reaction product prepared b y mixing 4-dodecylphenol, paraformaldehyde, tetraethylenepentamine and toluene. The mixture was heated to 110°C and refluxed for 6 hours. The solvent and water of reaction were then removed under vacuum. The molar ratio of aldehyde : polyamine : phenol was 2:1:2.

Additive C2 is a 83% active ingredient mannich reaction product prepared by reacting a polyisobutenyl substituted phenol in which the polyisobutene has a molecular weight of approximately 78 0 , paraformaldehyde and tetraethylenepentamine in toluene. The mixture was heated to 110°C and refluxed for 6 hours. The solvent and water of reaction were then removed under vacuum. The molar ratio of aldehyde : polyamine : phenol was 1:1:1.

Additive C3 is a 100 % active ingredient mannich reaction product prepared by reacting a polyisobutenyl substituted phenol in which the polyisobutene has a molecular weight of approximately 750, paraformaldehyde and tetraethylenepentamine in toluene. The mixture was heated to 110°C and refluxed for 6 hours. The solvent and water of reaction were then removed under vacuum. The molar ratio of aldehyde : polyamine : phenol was 2:1:2.

### Example 7

The Rancimat test of example 1 was then run on samples of biodiesel B100 (RME biodiesel derived from canola, sourced from the USA) at 110°C, including the nitrogen dispersant additives of the present invention in combination with phenolic antioxidants as detailed in table 7.

**TABLE 7**

| **Fuel** | **Additives** | **Treat Rate, ppm active** | **Temp, Deg C** | **Induction Time, h** | **% Improvement** | **% Improvement over AO alone** |
|---|---|---|---|---|---|---|
| B100 | - | - | 110 | 4.58 | | |
| B100 | TBHQ | 125 | 110 | 7.99 | 74% | |
| B100 | TBHQ+B1 | 125 + 125 | 110 | 9.78 | 114% | 22% |
| B100 | TBHQ+C1 | 125 + 125 | 110 | 10.06 | 120% | 26% |
| B100 | TBHQ+C3 | 125 + 125 | 110 | 9.51 | 108% | 19% |
| B100 | Pyrogallol | 125 | 110 | 13.45 | 194% | |
| B100 | Pyrogallol+ B1 | 125 + 125 | 110 | 14.92 | 226% | 11% |
| B100 | Pyrogallol+ C1 | 125 + 125 | 110 | 15.98 | 249% | 19% |
| B100 | Pyrogallol+ C3 | 125 + 125 | 110 | 15.03 | 228% | 12% |
| B100 | Pyrocatecho 1 | 125 | 110 | 6.49 | 42% | |
| B100 | Pyrocatecho 1+B1 | 125 + 125 | 110 | 7.68 | 68% | 18% |
| B100 | Pyrocatecho 1+C1 | 125 + 125 | 110 | 7.88 | 72% | 21% |
| B100 | Pyrocatecho 1+C3 | 125 + 125 | 110 | 7.47 | 63% | 15% |
| B100 | t-butyl-catechol | 125 | 110 | 7.17 | 57% | |
| B100 | t-butyl-catechol+B1 | 125 + 125 | 110 | 9.1 | 99% | 27% |
| B100 | t-butyl-catechol+C1 | 125 + 125 | 110 | 9.21 | 101% | 28% |
| B100 | t-butyl-catechol+C3 | 125 + 125 | 110 | 7.61 | 66% | 6% |
| B100 | BHT | 125 | 110 | 5.23 | 14% | |
| B100 | BHT+B1 | 125 + 125 | 110 | 6.3 | 38% | 20% |
| B100 | BHT+C1 | 125 + 125 | 110 | 6.65 | 45% | 27% |
| B100 | BHT+C3 | 125 + 125 | 110 | 6.19 | 35% | 18% |

## Claims

1. Use of a nitrogen-containing dispersant additive to improve the oxidation stability of a fuel composition containing biodiesel and an antioxidant additive selected from phenolic antioxidants and phenylenediamine antioxidants; wherein the nitrogen-containing dispersant is an acylated nitrogen-containing compound that is made by reacting a poly(isobutene)-substituted succinic acid-derived acylating agent wherein the poly(isobutene) substituent has 12 to 200 carbon atoms with a mixture of ethylene polyamines having 3 to 9 amino nitrogen atoms per ethylene polyamine and 1 to 8 ethylene groups wherein the acylated nitrogen compounds are formed by the reaction of a molar ratio of acylating agent : amino compound of from 2.1 to 1:2; wherein the phenolic antioxidant is selected from tertiarybutylhydroquinone, pyrogallol, propylgallate, BHT, pyrocatechol and tertiarybutylcatechol; and wherein the poly(isobutene)-substituted succinic acid-derived acylating agent has a PIB molecular weight of from 500 to 2800.

2. Use according to claim 1 wherein the poly(isobutene)-substituted succinic acid-derived acylating agent has a PIB molecular weight of from 500 to 1500.

3. Use according to claim 1 or claim 2 wherein the ratio of nitrogen-containing dispersant to antioxidant is from 3:1 to 1.3.

4. Use according to any preceding claim wherein the antioxidant additive is a phenolic antioxidant.

5. Use of a nitrogen-containing dispersant as defined in claim 1 or claim 2 to increase the oxidation stability as measured by the Rancimat test of a fuel composition containing biodiesel and an antioxidant additive by at least 15%.

6. Use of a nitrogen-containing dispersant as defined in claim 1 or claim 2 to improve the oxidation stability of a fuel composition containing biodiesel and an antioxidant additive in a High Speed Direct Injection engine.

## Patentansprüche

1. Verwendung eines stickstoffhaltigen Dispergiermitteladditivs zur Verbesserung der Oxidationsstabilität einer Biodiesel un d ei n unter phenolischen Antioxidantien und Phenylendiamin-Antioxidantien ausgewähltes Antioxidansadditiv enthaltenden Brennstoffzusammensetzung; wobei es sich bei dem stickstoffhaltigen Dispergiermittel um eine acylierte stickstoffhaltige Verbindung handelt, die durch Umsetzung eines poly(isobuten)-substituierten, von Bernsteinsäure abgeleiteten Acylierungsmittels, wobei der Poly(isobuten)-Substituent 12 bis 200 Kohlenstoffatome aufweist, mit einer Mischung von Ethylenpolyaminen mit 3 bis 9 Amino-Stickstoffatomen pro Ethylenpolyamin und 1 bis 8 Ethylengruppen hergestellt wird, wobei die acylierten Stickstoffverbindungen durch Umsetzung eines Molverhältnisses von Acylierungsmittel : Aminoverbindung von 2: 1 bis 1:2 hergestellt werden, wobei das phenolische Antioxidans unter tert.-Butylhydrochinon, Pyrogallol, Propylgallat, BHT, Pyrocatechol und tert.-Butylcatechol ausgewählt ist und wobei das poly(isobuten)substituierte, von Bernsteinsäure abgeleitete Acylierungsmittel ein PIB-Molekulargewicht von 500 bis 2800 aufweist.

2. Verwendung nach Anspruch 1, wobei das poly-(isobuten) substituierte, von Bernsteinsäure abgeleitete Acylierungsmittel ein PIB-Molekulargewicht von 500 bis 1500 aufweist.

3. Verwendung nach Anspruch 1 oder Anspruch 2, wobei das Verhältnis von stickstoffhaltigem Dispergiermittel zu Antioxidans 3:1 bis 1:3 beträgt.

4. Verwendung na c h ein e m der vorhergehenden Ansprüche, wobei es sich bei dem Antioxidansadditiv um ein phenolisches Antioxidans handelt.

5. Verwendung eines stickstoffhaltigen Dispergiermittels gemäß Anspruch 1 oder Anspruch 2 zur Erhöhung de r durch de n Rancimat-T e s t einer Biodiesel und ein Antioxidansadditiv enthaltenden Brennstoffzusammensetzung bestimmten Oxidationsstabilität um mindestens 15%.

6. Verwendung eines stickstoffhaltigen Dispergiermittels gemäß Anspruch 1 oder Anspruch 2 zur Verbesserung der Oxidationsstabilität einer Biodiesel und ein Antioxidansadditiv enthaltenden Brennstoffzusammensetzung in einem schnelllaufenden Motor mit Direkteinspritzung.

## Revendications

1. Utilisation d'un additif dispersant azoté pour améliorer la stabilité à l'oxydation d'une composition de carburant contenant du biodiesel et un additif antioxydant choisi parmi les antioxydants phénoliques et les antioxydants de type phénylènediamine ; dans laquelle le dispersant azoté est un composé azoté acylé qui est préparé par réaction d'un agent d'acylation dérivé d'acide succinique portant un substituant poly-(isobutène) dans lequel le substituant poly(isobutène) comporte 12 à 200 atomes de carbone avec un mélange d'éthylènepolyamines comportant 3 à 9 atomes d'azote de fonction amino par éthylènepolyamine et 1 à 8 groupes éthylène, dans laquelle les composés azotés acylés sont formés par réaction d'un rapport molaire entre l'agent d'acylation et le composé amino allant de 2:1 à 1:2, dans laquelle l'antioxydant phénolique est choisi parmi la t-butylhydroquinone, le pyrogallol, le gallate de propyle, le BHT, le pyrocatéchol et le t-butylcatéchol ; et dans laquelle l'agent d'acylation dérivé d'acide succinique portant un substituant poly(isobutène) possède un poids moléculaire du PIB allant de 500 à 2800.

2. Utilisation selon la revendication 1 dans laquelle l'agent d'acylation dérivé d'acide succinique portant un substituant poly(isobutène) possède un poids moléculaire du PIB allant de 500 à 1500.

3. Utilisation selon la revendication 1 ou la revendication 2 dans laquelle le rapport entre le dispersant azoté et l'antioxydant est de 3:1 à 1:3.

4. Utilisation selon l'une quelconque des revendications précédentes dans laquelle l'additif antioxydant est un antioxydant phénolique.

5. Utilisation d'un dispersant azoté selon la revendication 1 ou la revendication 2 pour augmenter d'au moins 15% la stabilité à l'oxydation mesurée par le test Rancimat d'une composition de carburant contenant du biodiesel et un additif antioxydant.

6. Utilisation d'un dispersant azoté selon la revendication 1 ou la revendication 2 pour améliorer la stabilité à l'oxydation d'une composition de carburant contenant du biodiesel et un additif antioxydant dans un moteur à injection directe à haut régime.
